# EUROPEAN PATENT APPLICATION

(11) **EP 3 076 610 A1**
(43) Date of publication of application: **05.10.2016**
(21) Application number: 14874395.8
(22) Date of filing: 18.06.2014
(51) Int. Cl.: H04L 12/701

(54) **CROSS-DOMAIN PATH PROCESSING METHOD AND DEVICE**

(30) Priority: 27.12.2013 CN 201310740027
(71) Applicant: ZTE Corporation, Shenzhen City, Guangdong 518057 (CN)
(72) Inventor: ZHU, Yuting, Shenzhen Guangdong 518057 (CN); XIANG, Xiaoshan, Shenzhen Guangdong 518057 (CN); MA, Heng, Shenzhen Guangdong 518057 (CN); CHEN, Qianxue, Shenzhen Guangdong 518057 (CN)
(74) Representative: Awapatent AB
(86) International application number: PCT/CN2014/080219
(87) International publication number: WO 2015/096415

(57) **Abstract**

A cross-domain path processing method and apparatus, after acquiring links between child PCEs, a father PCE separates domain sequences according to a source domain and a destination domain; and the father PCE collects sub-domain path computation results, and computes a working path and a protection path between the source domain and the destination domain in combination with inter-domain links and related strategies.

## Description

### Technical Field

The present invention relates to the field of communication technologies, and in particular, to a cross-domain path processing method and apparatus.

### Background of the Related Art

In recent years, the scale of networks and a number of users increase significantly, construction of paths is not only limited to computation of paths in a domain, and high efficient path selection of cross-domain and cross-Autonomous System (AS) is increasingly urgent. At the same time, users have increasing requirements for Quality of Service (QoS) such as the reliability of channel connections, connection jitter, transmission delay in a communication network or the like, and corresponding constraint conditions need to be comprehensively considered when an end-to-end cross-domain path is established.

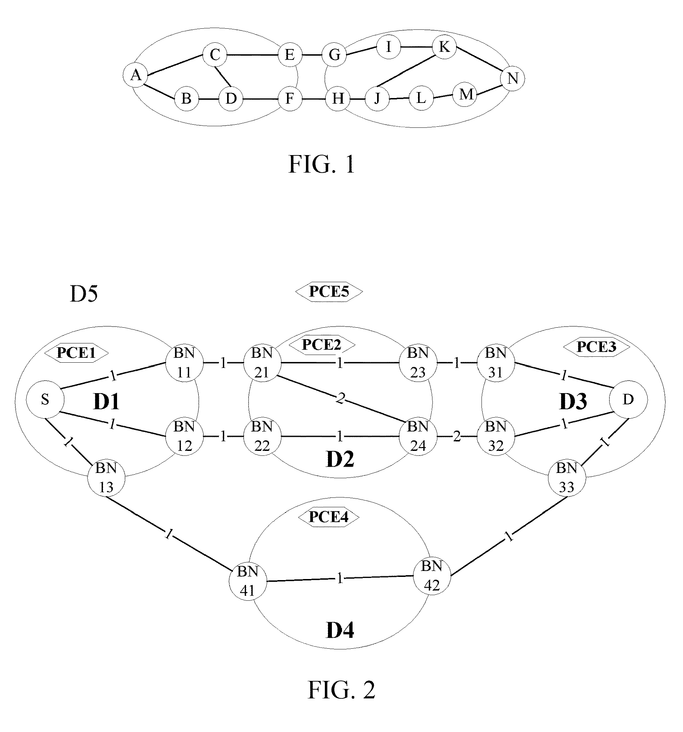

The current reliable cross-domain path computation method needs to establish a protection path to achieve cross-domain path computation which meets certain requirements for the reliability. Currently, a per-domain path computation manner may be shown in Fig. 1, in which under the request of separating into a working path and a protection path, in order to protect and compute the separate paths, a node A may provide {ACEG and ABDFH}, and the first domain can achieve separation. However, when an independent request achieves points G and H, a shortest path computed by point G is GIKN, and a shortest path computed by point H is HJKN. As a link KN is shared, link separation cannot be achieved. The above per-domain path computation is merely suitable for a simple connected network, and only after paths are completely computed in one domain, paths in the next domain can be computed, which has low efficiency.

### Summary of the Invention

In view of this, embodiments of the present invention provide a cross-domain path processing method and apparatus.

The embodiments of the present invention provide a cross-domain path processing method, comprising:
after a father Path Computation Element (PCE) acquires links between child PCEs, the father PCE separating domain sequences according to a source domain and a destination domain; and the father PCE collecting sub-domain path computation results, and computing a working path and a protection path between the source domain and the destination domain in combination with inter-domain links and related strategies.

In the above solution, when the father PCE acquires links between child PCEs, the father PCE interacts information with the child PCEs to acquire a domain topology to obtain links between the child PCEs.

In the above solution, when the sub-domain path computation results are collected, a side-to-side path computation request is transmitted to an intermediate domain PCE to request the intermediate domain PCE to compute intra-domain paths of the intermediate domain; and
a source-to-side path computation request is transmitted to a source domain PCE to request the source domain PCE to compute intra-domain paths of the source domain; and in a case that a source node and different egress nodes of the current domain corresponding to two domain paths are known, all related intra-domain paths from the source node to the egress nodes are computed; and
a side-to-destination path computation request is transmitted to a destination domain PCE to request the destination domain PCE to compute intra-domain paths of the destination domain; and in a case that ingress nodes of different domain paths and a destination node are known, all related intra-domain paths from the ingress nodes to the destination node are computed.

In the above solution, when the intra-domain paths of the intermediate domain are requested to be computed,
if only one of the separated domain paths passes through the intermediate domain, in a case that an ingress node and an egress node of the intermediate domain are known, all intra-domain paths from the ingress node to the egress node which comply with related strategies are computed; and
if all of the separated domain paths pass through the intermediate domain, corresponding intra-domain paths are computed respectively according to different ingress nodes and egress nodes of various domain paths, and two intra-domain paths obtained by computing are not intersected.

In the above solution, when the working path and the protection path between the source domain and the destination domain are computed, paths are further spliced to be selected according to the inter-domain links and the intra-domain paths.

The embodiments of the present invention further provide a cross-domain path processing apparatus, wherein the apparatus is a father Path Computation Element (PCE) comprising:
an acquisition sub-unit configured to acquire links between child PCEs, and separate domain sequences according to a source domain and a destination domain; and
a collection sub-unit configured to collect sub-domain path computation results, and compute a working path and a protection path between the source domain and the destination domain in combination with inter-domain links and related strategies.

In the above solution, the acquisition sub-unit is further configured to, when acquiring links between child PCEs, interact information with the child PCEs to acquire a domain topology to obtain links between the child PCEs.

In the above solution, the collection sub-unit is further configured to, when collecting the sub-domain path computation results, transmit a side-to-side path computation request to an intermediate domain PCE to request the intermediate domain PCE to compute intra-domain paths of the intermediate domain; and
transmit a source-to-side path computation request to a source domain PCE to request the source domain PCE to compute intra-domain paths of the source domain; and in a case that a source node and different egress nodes of the current domain corresponding to two domain paths are known, compute all related intra-domain paths from the source node to the egress nodes; and
transmit a side-to-destination path computation request to a destination domain PCE to request the destination domain PCE to compute intra-domain paths of the destination domain; and in a case that ingress nodes of different domain paths and a destination node are known, compute all related intra-domain paths from the ingress nodes to the destination node.

In the above solution, when the intra-domain paths of the intermediate domain are requested to be computed, the collection sub-unit is further configured to, when the intra-domain paths of the intermediate domain are requested to be computed, if only one of the separated domain paths passes through the intermediate domain, in a case that an ingress node and an egress node of the intermediate domain are known, compute all intra-domain paths from the ingress node to the egress node which comply with related strategies; and
if all of the separated domain paths pass through the intermediate domain, compute corresponding intra-domain paths respectively according to different ingress nodes and egress nodes of various domain paths, wherein two intra-domain paths obtained by computing are not intersected.

In the above solution, the collection sub-unit is further configured to, when the working path and the protection path between the source domain and the destination domain are computed, splice paths to select paths according to the inter-domain links and the intra-domain paths.

When the acquisition sub-unit and the collection sub-unit perform processes, they may be implemented by using a Central Processing Unit (CPU), a Digital Signal Processor (DSP) or a Field-Programmable Gate Array (FPGA).

In the cross-domain path processing method and apparatus provided by the embodiments of the present invention, after a father Path Computation Element (PCE) acquires links between child PCEs, the father PCE separates domain sequences according to a source domain and a destination domain; and the father PCE collects sub-domain path computation results, and computes a working path and a protection path between the source domain and the destination domain in combination with inter-domain links and related strategies. In this way, the end-to-end cross-domain working path and protection path can be efficiently computed.

### Brief Description of Drawings

Fig. 1 is a schematic diagram of the principle of per-domain path computation;
Fig. 2 is a schematic diagram of a network scenario according to embodiment one of the present invention;
Fig. 3 is a schematic diagram of a network topology obtained by Path Computation Element (PCE) 5 according to embodiment one of the present invention;
Fig. 4 is a schematic diagram of abstract paths for computing a working path and a protection path after separating domain sequences according to embodiment one of the present invention;
Fig. 5 is a schematic diagram of an end-to-end path topology collected by the PCE5 according to embodiment one of the present invention;
Fig. 6 is a schematic diagram of two paths which are finally selected by the PCE5 according to embodiment one of the present invention;
Fig. 7 is a schematic diagram of a network scenario according to embodiment two of the present invention;
Fig. 8 is a schematic diagram of a network topology obtained by PCE6 according to embodiment two of the present invention;
Fig. 9 is a schematic diagram of an end-to-end path topology collected by the PCE6 according to embodiment two of the present invention; and
Fig. 10 is a brief flowchart of a cross-domain path process according to an embodiment of the present invention.

### Specified Embodiments

In a hierarchical PCE architecture, there are two types of path computation elements according to different functions, which are a child PCE and a father PCE. Wherein, the child PCE is responsible for path computation within a domain, and the father PCE is responsible for acquiring inter-domain links by collecting information from each child PCE, separating domain sequences, and requiring each child PCE to compute paths for a domain thereof. Generally, the father PCE can achieve a function of computing end-to-end paths, and the child PCE may be responsible for computing paths of a domain thereof.

In practical applications, a father PCE may acquire links between various child PCEs, and separate domain sequences according to a source domain and a destination domain. Further, the child PCEs may acquire intra-domain links according to conditions in respective domains and notify the father PCE, so that the father PCE may compute a working path and a protection path between the source domain and the destination domain according to sub-domain path computation results in combination with inter-domain links and related strategies.

Specifically, the following steps may be performed.

In step 1, a PCE initial information exchange process in a hierarchical PCE architecture is performed.

Step 1 comprises steps 1.1-1.5. Specifically,
in step 1.1, a child PCE configures information of a father PCE to establish communication with the father PCE;
in step 1.2, the child PCE learns an intra-domain topology and inter-domain connections through an Interior Gateway Protocol (IGP);
in step 1.3, the child PCE reports connections with neighbor domains to the father PCE;
in step 1.4, the child PCE reports resource changes of cross-domain links to the father PCE.

It should be illustrated that the father PCE may generate a domain topology graph based on the above operations.

In step 2, a source node transmits a path computation request to a source domain PCE, and the source domain PCE judges whether a destination node is in the source domain, if so, the source domain PCE is also a destination domain PCE, and the process turns to step 11; otherwise, the source domain PCE transmits a path computation request to the father PCE.

In step 3, the father PCE finds a domain where the destination node is located.

In step 4, the father PCE separates domain sequences according to the source domain and the destination domain.

In step 5, the father PCE computes a working path and a protection path respectively under different domain sequences.

In step 6, the father PCE transmits a side-to-side path computation request to an intermediate domain PCE, to request the intermediate domain PCE to compute intra-domain paths of the intermediate domain PCE.

Step 6 comprises steps 6.1-6.2. Specifically,
in step 6.1, if only one of the two domain paths separated by the father PCE passes through the intermediate domain, in a case that an ingress node and an egress node of the intermediate domain are known, all intra-domain paths from the ingress node to the egress node which comply with related strategies (for example, a minimum cost strategy or the like, the same below) are computed; and
in step 6.2, if both of the two domain paths separated by the father PCE pass through the intermediate domain, corresponding intra-domain paths are computed respectively according to different ingress nodes and egress nodes of various domain paths, and two intra-domain paths obtained by computing are not intersected.

In step 7, the father PCE transmits a source-to-side path computation request to the source domain PCE to request the source domain PCE to compute intra-domain paths of the source domain (i.e., a domain where the source node is located); and in a case that a source node and different egress nodes of the current domain corresponding to two domain paths are known, all intra-domain paths from the source node to the egress nodes are computed.

In step 8, the father PCE transmits a side-to-destination path computation request to a destination domain PCE to request the destination domain PCE to compute intra-domain paths of the destination domain (i.e., a domain where the destination node is located); and in a case that ingress nodes of different domain paths and a destination node are known, all intra-domain paths from the ingress nodes to the destination node are computed.

In step 9, the father PCE collects path computation results of all child PCEs, and splices paths to select paths to obtain final path computation results in combination with the inter-domain links and related strategies.

In step 10, the father PCE returns the obtained path computation results to the source PCE (i.e., a PCE in the source domain); and the path computation results comprise two end-to-end cross-domain paths, of which one is a working path and the other is a protection path.

In step 11, the source PCE returns the path computation results to the source node.

The present invention will be described in detail below with reference to accompanying drawings and in conjunction with embodiments.

### Embodiment one

With reference to Fig. 2, Fig. 2 includes a simple multi-domain networking, wherein there are 4 sub-domains, the sub-domains which are connected with each other are included in a father domain, and each domain has a PCE. In order to place emphasis on separation domain sequences in a case of cross-domain paths in the present invention, except a source node S and a destination node D, inner nodes of various domains are omitted, and there are only edge nodes in the network scenario. In practical applications, it needs to separate domain sequences, and compute a working path and a protection path between the pair of source and destination nodes (S, D) in different domain sequences.

In step 1, information is exchanged between child PCEs and a father PCE.

Step 1 comprises steps 1.1-1.5. Specifically,
in step 1.1, PCE1 as a child PCE configures information (an address of the PCE5) of PCE5 as the father PCE;
in step 1.2, the PCE1 establishes communication with the PCE5;
in step 1.3, the PCE1 learns intra-domain topology information and inter-domain connections (BN11-BN21, BN12-BN22 and BN13-BN44) through IGP;
in step 1.4, the PCE1 reports information of connections with neighbor domains to the PCE5;
in step 1.5, the PCE1 reports resource changes of cross-domain links to the PCE5.

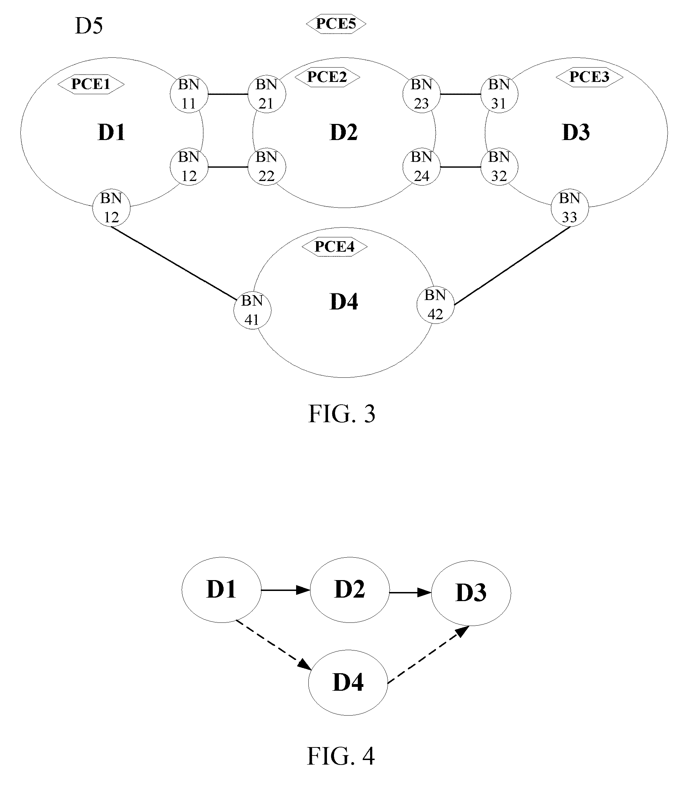

In step 2, all of PCE2, PCE3 and PCE4 as child PCEs perform steps 1.1-1.5, and the father PCE generates a domain topology graph illustrated in Fig. 3.

In step 3, the source node S transmits a path computation request message to the PCE1.

In step 4, the PCE1 checks that the destination node is not in Domain (D) 1, and transmits a path computation request message to the PCE5.

In step 5, the PCE5 finds that the destination node D is in domain 3 according to the topology graph.

In step 6, the source node and the destination node are determined, then the father PCE separates domain sequences according to the domains where the source node and the destination node are located, to determine the sequences of domains through which two end-to-end paths which are not intersected need to pass, wherein the two domain paths may be D1-D2-D3 and D1-D4-D3, as shown in Fig. 4.

It should be illustrated that a domain sequence is an order in which by regarding each domain as a node, a path passes through these nodes. If a domain sequence from the source node to the destination node is determined, an ingress node and an egress node of each domain are also substantially determined.

In step 7, the father PCE computes specific domain paths according to the two different domain paths. D1-D2-D3 may have 4 different domain paths: S-BN11-BN21-BN23-BN31-D, S-BN11-BN21-BN24-BN32-D, S-BN12-BN22-BN24-BN32-D and S-BN12-BN22-BN23-BN31-D. D1-D4-D3 has only one domain path: S-BN13-BN41-BN42-BN33-D.

In step 8, the PCE5 transmits a side-to-side path computation request to the PCE2, to request the PCE2 to compute possible intra-domain paths for BN21-BN23, BN22-BN24, BN21-BN24 and BN22-BN23, and BN21-BN23 and BN22-BN24 may be obtained according to related strategies.

In step 9, the PCE5 transmits a side-to-side path computation request to the PCE4, to request the PCE4 to compute a possible intra-domain path for BN41-BN42.

In step 10, the PCE5 transmits a source-to-side path computation request to the PCE1, to request the PCE1 to compute paths for S-BN11 and S-BN12, and S-BN11 and S-BN12 meet requirements according to related strategies.

In step 11, the PCE5 transmits a side-to-destination path computation request to the PCE3, to request the PCE3 to compute paths for BN31-D, BN32-D and BN33-D, and all of BN31-D, BN32-D and BN33-D meet requirements according to related strategies.

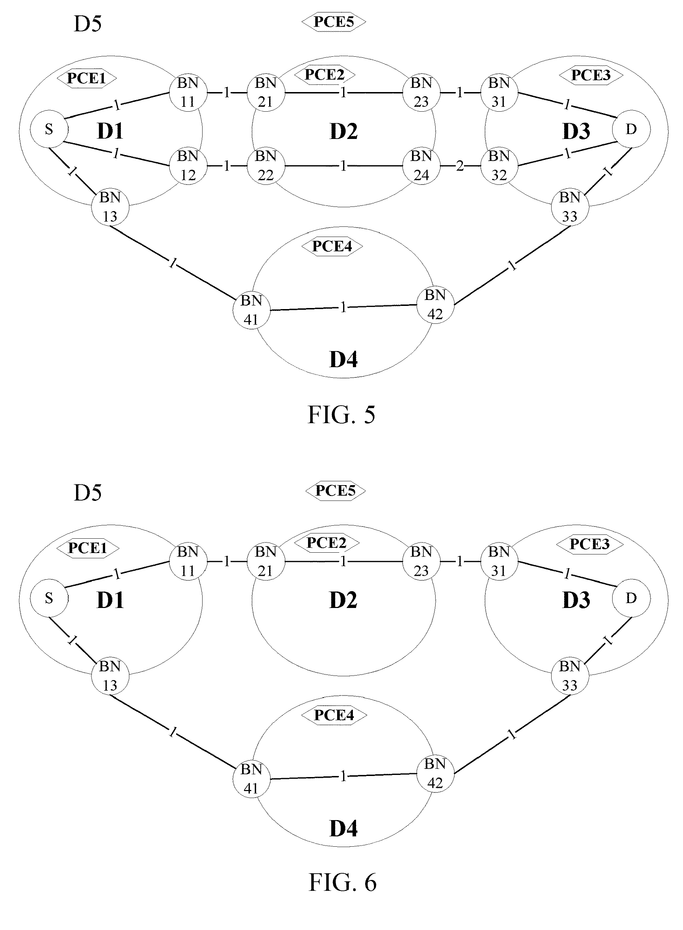

In step 12, the PCE5 adds the collected sub-domain paths into the inter-domain links. As shown in Fig. 5, there are three paths, i.e., S-BN11-BN21-BN23-BN31-D, S-BN12-BN22-BN24-BN32-D and S-BN11-BN21-BN23-BN31-D.

In step 13, the PCE5 obtains two paths, i.e. S-BN11-BN21-BN23-BN31-D and S-BN13-BN41-BN42-BN33-D, according to related strategies, and finally the PCE5 computes the required two end-to-end paths which are not intersected, sets one of the two paths as the working path and sets the other of the two paths as the protection path, as shown in Fig. 6.

### Embodiment two

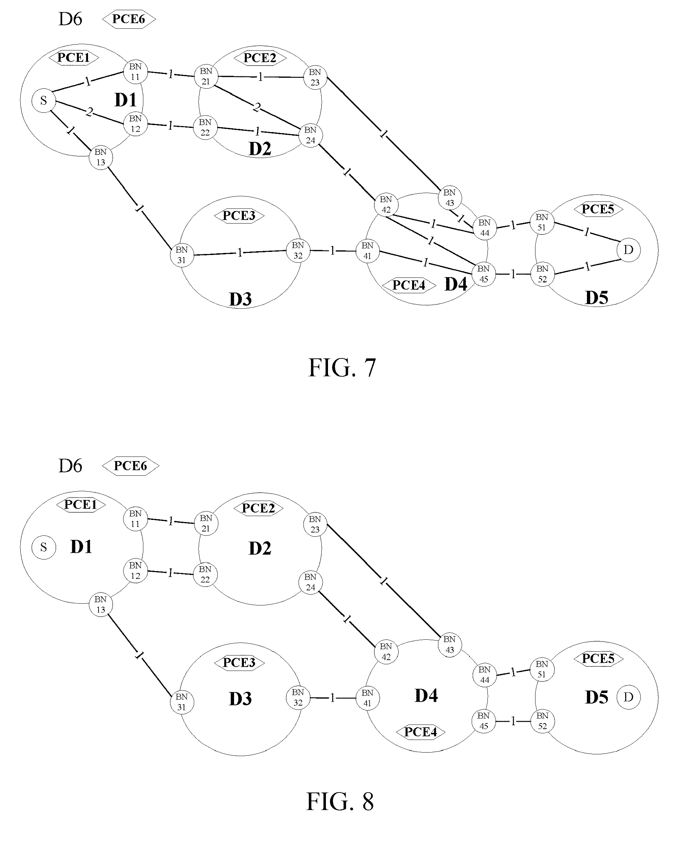

With reference to Fig. 7, Fig. 7 illustrates a scenario of multi-domain networking, wherein there are 5 sub-domains, the sub-domains which are connected with each other are included in a father domain, and each domain has a PCE. In order to place emphasis on separation domain sequences in a case of cross-domain paths in the present invention, except a source node S and a destination node D, inner nodes of various domains are omitted, and there are only edge nodes in the network scenario. In practical applications, it needs to separate domain sequences, and compute a working path and a protection path between the pair of source and destination nodes (S, D) in different domain sequences.

In step 1, information is exchanged between child PCEs and a father PCE.

Step 1 comprises steps 1.1-1.5. Specifically,
in step 1.1, PCE1 as a child PCE configures information (an address of the PCE6) of PCE6 as the father PCE;
in step 1.2, the PCE1 establishes communication with the PCE6;
in step 1.3, the PCE1 learns intra-domain topology information and inter-domain connections (BN11-BN21, BN12-BN22 and BN13-BN31) through IGP;
in step 1.4, the PCE1 reports information of connections with neighbor domains to the PCE6;
in step 1.5, the PCE1 reports resource changes of cross-domain links to the PCE6.

In step 2, all of PCE2, PCE3, PCE4 and PCE5 as child PCEs perform steps 1.1-1.5, and the PCE6 generates a domain topology graph illustrated in Fig. 8.

In step 3, the source node S transmits a path computation request message to the PCE1.

In step 4, the PCE1 checks that the destination node is not in domain 1, and transmits a path computation request message to the PCE6.

In step 5, the PCE6 finds that the destination node D is in domain 5 according to the topology graph.

In step 6, the source node and the destination node are determined, then the father PCE separates domain sequences according to the domains where the source node and the destination node are located, to determine the sequences of domains through which two end-to-end paths which are not intersected need to pass, wherein the two domain paths may be D1-D2-D4-D5 and D1-D3-D4-D5.

It should be illustrated that a domain sequence is an order in which by regarding each domain as a node, a path passes through these nodes. If a domain sequence from the source node to the destination node is determined, an ingress node and an egress node of each domain are also substantially determined.

In step 7, the PCE6 computes specific domain paths according to the two different domain paths. D1-D2-D4-D5 may have 8 different domain paths:
S-BN11-BN21-BN23-BN43-BN44-BN51-D, S-BN11-BN21-BN23-BN43-BN45-BN52-D, S-BN11-BN21-BN24-BN42-BN44-BN51-D, S-BN11-BN21-BN24-BN42-BN45-BN52-D, S-BN11-BN22-BN23-BN43-BN44-BN51-D, S-BN11-BN22-BN23-BN43-BN45-BN52-D, S-BN11-BN22-BN24-BN42-BN44-BN51-D, and S-BN11-BN22-BN24-BN42-BN45-BN52-D. D1-D3-D4-D5 has two domain paths: S-BN13-BN31-BN32-BN41-BN44-BN51-D and S-BN13-BN31-BN32-BN41-BN45-BN52-D.

In step 8, the PCE6 transmits a side-to-side path computation request to the PCE2, to request the PCE2 to compute possible intra-domain paths for BN21-BN23, BN22-BN24, BN21-BN24 and BN22-BN23, and BN21-BN23 and BN22-BN24 may be obtained according to related strategies.

In step 9, the PCE6 transmits a side-to-side path computation request to the PCE3, to request the PCE3 to compute a possible intra-domain path for BN31-BN32.

In step 10, the PCE6 transmits a side-to-side path computation request to the PCE4, to request the PCE4 to compute possible intra-domain paths for BN41-BN44 and BN41-BN44 as well as possible intra-domain paths for BN42-BN44, BN42-BN45, BN43-BN44 and BN43-BN45, and BN42-BN44 or BN43-BN44 as well as BN41-BN45 are obtained according to related strategies.

In step 11, the PCE6 transmits a source-to-side path computation request to the PCE1, to request the PCE1 to compute paths for S-BN11 and S-BN12, and S-BN11 meets requirements according to related strategies.

In step 12, the PCE6 transmits a side-to-destination path computation request to the PCE5, to request the PCE5 to compute strategies for BN51-D and BN52-D, and BN51-D and BN52-D meet requirements according to related strategies.

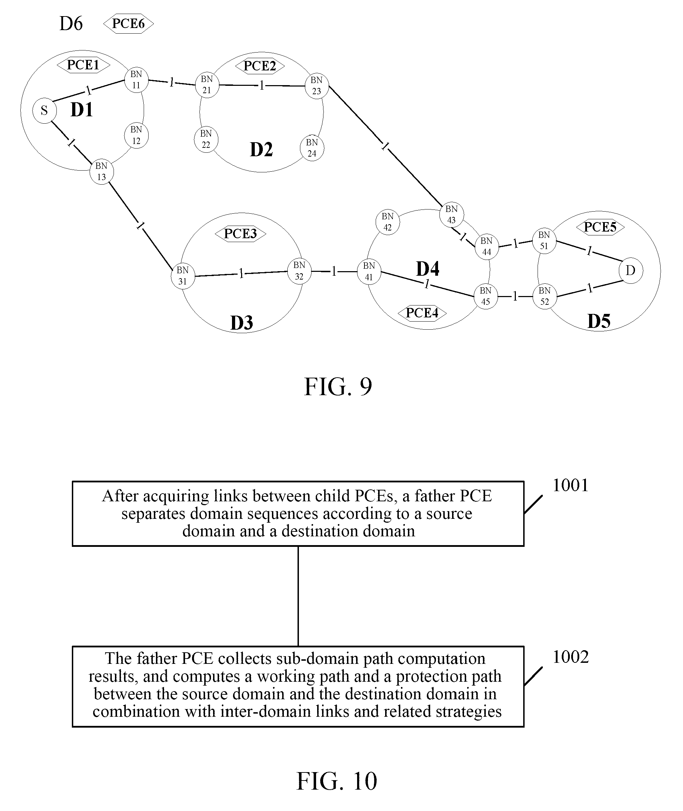

In step 13, the PCE6 adds the collected sub-domain paths into the inter-domain links. As shown in Fig. 9, there are two paths, i.e., S-BN11-BN21-BN23-BN41-BN51-D and S-BN13 -BN21-BN32-BN41-BN45-BN52-D.

In step 14, finally the PCE6 computes the required two end-to-end paths which are not intersected, sets one of the two paths as the working path and sets the other of the two paths as the protection path.

It can be seen in combination with the above description that when a cross-domain path process is implemented in the present invention, the operation illustrated in Fig. 10 may be performed:
in step 1001, after acquiring links between child PCEs, a father PCE separates domain sequences according to a source domain and a destination domain; and
in step 1002, the father PCE collects sub-domain path computation results, and computes a working path and a protection path between the source domain and the destination domain in combination with inter-domain links and related strategies.

In conclusion, no matter the invention or the apparatus, the method for computing cross-domain working path and protection path according to the present invention is extended on the basis of hierarchical PCE technology, and a working path and a protection path may be computed respectively on the basis that the father PCE separates domain sequences, thereby significantly enhancing the efficiency of determining cross-domain paths.

Those skilled in the art should appreciate that the embodiments of the present invention can be provided as methods, systems, or computer program products. Therefore, forms such as hardware-only embodiments, software-only embodiments, or embodiments combining software and hardware can be used in the present invention. In addition, forms such as a computer program product which is implemented on one or more of computer usable storage media (comprising but not limited to a disk memory, an optical memory etc.) with computer usable program codes can be used in the present invention.

The present invention is described with reference to the flowcharts and/or block diagrams of the methods, devices (systems) and computer program products according to the embodiments of the present invention. It should be understood that each flow and/or block in the flowcharts and/or block diagrams as well as a combination of the flows and/or blocks in the flowcharts and/or block diagrams can be implemented by computer program instructions. These computer program instructions can be provided to a processor of a general-purpose computer, a dedicated-purpose computer, an embedded processor, or other programmable data processing devices to generate a machine. Thereby, the instructions executed by the processor of the computer or other programmable data processing devices generate means for implementing functions specified in one or more flows in the flowcharts and/or one or more blocks in the block diagrams.

These computer program instructions can also be stored in a computer readable memory capable of introducing a computer or other programmable data processing devices to operate in a particular mode. Thereby, the instructions stored in the computer readable memory generate an article of manufacture comprising instruction means for implementing functions specified in one or more flows in the flowcharts and/or one or more blocks in the block diagrams.

These computer program instructions can also be loaded onto a computer or other programmable data processing devices, to enable a series of operation steps to be performed on the computer or other programmable devices to generate a computer-implemented process. Thereby, the instructions executed on the computer or other programmable devices provide steps of implementing functions specified in one or more flows in the flowcharts and/or one or more blocks in the block diagrams.

The above description is merely preferable embodiments of the present invention, instead of limiting the protection scope of the present invention.

### Industrial applicability

In the cross-domain path processing method and apparatus provided by the embodiments of the present invention, after a father Path Computation Element (PCE) acquires links between child PCEs, the father PCE separates domain sequences according to a source domain and a destination domain; and the father PCE collects sub-domain path computation results, and computes a working path and a protection path between the source domain and the destination domain in combination with inter-domain links and related strategies. In this way, the end-to-end cross-domain working path and protection path can be efficiently computed.

## Claims

1. A method for processing cross-domain path, comprising:
after a father Path Computation Element (PCE) acquires links between child PCEs, the father PCE separating domain sequences according to a source domain and a destination domain; and the father PCE collecting sub-domain path computation results, and computing a working path and a protection path between the source domain and the destination domain in combination with inter-domain links and related strategies.

2. The method according to claim 1, wherein when the father PCE acquires links between child PCEs, the father PCE exchanges information with the child PCEs to acquire a domain topology to obtain links between the child PCEs.

3. The method according to claim 1, wherein when the sub-domain path computation results are collected, a side-to-side path computation request is transmitted to an intermediate domain PCE to request the intermediate domain PCE to compute intra-domain paths of intermediate domain; and
a source-to-side path computation request is transmitted to a source domain PCE to request the source domain PCE to compute intra-domain paths of the source domain; and in a case that a source node and different egress nodes of present domain corresponding to two domain paths are known, all related intra-domain paths from the source node to the egress nodes are computed; and
a side-to-destination path computation request is transmitted to a destination domain PCE to request the destination domain PCE to compute intra-domain paths of the destination domain; and in a case that ingress nodes of different domain paths and a destination node are known, all related intra-domain paths from the ingress nodes to the destination node are computed.

4. The method according to claim 3, wherein when the intra-domain paths of the intermediate domain are requested to be computed,
if only one of separated domain paths passes through the intermediate domain, in a case that an ingress node and an egress node of the intermediate domain are known, all intra-domain paths from the ingress node to the egress node which comply with related strategies are computed; and
if all of the separated domain paths pass through the intermediate domain, corresponding intra-domain paths are computed respectively according to different ingress nodes and egress nodes of various domain paths, and two intra-domain paths obtained by computing are not intersected.

5. The method according to any one of claims 1-4, wherein when the working path and the protection path between the source domain and the destination domain are computed, paths are further spliced to be selected according to the inter-domain links and the intra-domain paths.

6. An apparatus for processing cross-domain path, wherein the apparatus is a father Path Computation Element (PCE) comprising:
an acquisition sub-unit configured to acquire links between child PCEs, and separate domain sequences according to a source domain and a destination domain; and
a collection sub-unit configured to collect sub-domain path computation results, and compute a working path and a protection path between the source domain and the destination domain in combination with inter-domain links and related strategies.

7. The apparatus according to claim 6, wherein the acquisition sub-unit is further configured to, when acquiring links between child PCEs, exchange information with the child PCEs to acquire a domain topology to obtain links between the child PCEs.

8. The apparatus according to claim 6, wherein the collection sub-unit is further configured to, when collecting the sub-domain path computation results, transmit a side-to-side path computation request to an intermediate domain PCE to request the intermediate domain PCE to compute intra-domain paths of intermediate domain; and
transmit a source-to-side path computation request to a source domain PCE to request the source domain PCE to compute intra-domain paths of the source domain; and in a case that a source node and different egress nodes of present domain corresponding to two domain paths are known, compute all related intra-domain paths from the source node to the egress nodes; and
transmit a side-to-destination path computation request to a destination domain PCE to request the destination domain PCE to compute intra-domain paths of the destination domain; and in a case that ingress nodes of different domain paths and a destination node are known, compute all related intra-domain paths from the ingress nodes to the destination node.

9. The apparatus according to claim 8, wherein the collection sub-unit is further configured to, when the intra-domain paths of the intermediate domain are requested to be computed, if only one of separated domain paths passes through the intermediate domain, in a case that an ingress node and an egress node of the intermediate domain are known, compute all intra-domain paths from the ingress node to the egress node which comply with related strategies; and
if all of the separated domain paths pass through the intermediate domain, compute corresponding intra-domain paths respectively according to different ingress nodes and egress nodes of various domain paths, wherein two intra-domain paths obtained by computing are not intersected.

10. The apparatus according to any one of claims 6-9, wherein the collection sub-unit is further configured to, when the working path and the protection path between the source domain and the destination domain are computed, splice paths to select paths according to the inter-domain links and the intra-domain paths.
